# FASCICULE DE BREVET EUROPEEN

(11) **EP 1 520 128 B1**
(45) Date de publication et mention de la délivrance du brevet: **21.12.2005**
(21) Numéro de dépôt: 03762555.5
(22) Date de dépôt: 30.06.2003
(51) Int. Cl.: F16J 15/08, F16J 15/06

(54) **AGENCEMENT D UN CAPTEUR ET DE SES CONNEXIONS FILAIRES DANS U N JOINT DE CULASSE METALLIQUE, MULTIFEUILLES**
ANORDNUNG FÜR EINEN SENSOR UND SEINE DRAHTVERBINDUNGEN IN EINER MEHRPLATTEN-ZYLINDERKOPFDICHTUNG AUS METALL
ARRANGEMENT FOR A SENSOR AND ITS WIRE CONNECTIONS IN A MULTIPLE-PLATE METAL CYLINDER-HEAD GASKET

(30) Priorité: 08.07.2002 FR 0208527
(43) Date de publication de la demande: 06.04.2005
(73) Titulaire: Carl Freudenberg, 69469 Weinheim (DE)
(72) Inventeur: PEPIN, Frédéric, F-87100 Limoges (FR)
(86) Numéro de dépôt international: PCT/EP2003/006922
(87) Numéro de publication internationale: WO 2004/005772

(56) Documents cités:
- EP-A- 0 472 219
- US-A- 5 659 132
- PATENT ABSTRACTS OF JAPAN vol. 1999, no. 09, 30 juillet 1999 (1999-07-30) & JP 11 094676 A (HITACHI LTD), 9 avril 1999 (1999-04-09)
- PATENT ABSTRACTS OF JAPAN vol. 1997, no. 11, 28 novembre 1997 (1997-11-28) & JP 09 195814 A (NIPPON REINZ CO LTD), 29 juillet 1997 (1997-07-29) cité dans la demande

## Description

La présente invention concerne un agencement d'un capteur et de ses connexions filaires dans un joint de culasse métallique, multifeuilles.

Les moteurs à explosion interne deviennent de plus en plus pointus et de plus en plus contrôlés tant dans la fabrication des pièces qui le composent mais aussi dans le fonctionnement une fois monté et mis en service.

C'est ainsi que la combustion est un point important non seulement pour améliorer le rendement et les performances de ces moteurs mais aussi dans un souci de limiter la pollution.

On arrive à ce résultat en dosant parfaitement les quantités de carburant et de comburant, le moment, le lieu d'introduction et les circulations avant et après explosion, en limitant les zones mortes, en contrôlant avec grande précision les hauteurs de joint et en maîtrisant l'explosion, notamment.

Les carburants eux-mêmes ont été améliorés.

Nombre de ces paramètres dépend des conditions de fonctionnement du moteur comme la température de l'air extérieur, la température du mélange avant introduction dans la chambre de combustion, la température du moteur, la température des gaz de sortie, et tous les paramètres de charge du moteur suivant la charge du véhicule et le type de conduite.

De nombreux capteurs sont prévus pour mesurer ces paramètres et les transmettre par fibres ou par fils indépendants ou à travers un bus jusqu'à une centrale d'acquisition et de commande.

Ces capteurs sont de type connu et disposés en différents endroits du moteur, en piquage sur les différents circuits fluides et dans des logements ménagés dans le bloc moteur et dans la culasse, à partir de l'extérieur.

Par contre, on ne dispose pas des paramètres qui sont les plus importants à savoir, la température et la pression par exemple, au sein même de la chambre de combustion et aucune indication sur les oscillations de la culasse par rapport au bloc moteur ou sur les évolutions du serrage ou de la fatigue du joint de culasse et de ses constantes élastiques au cours du temps.

Or c'est précisément en cet endroit qu'il convient de mesurer avec exactitude tous ces paramètres si l'on souhaite assurer un pilotage amélioré et plus précis.

Ceci va dans le sens d'une optimisation du rendement du cycle de combustion et une diminution de la pollution par une limitation du volume d'imbrûlés rejetés.

Par contre, le problème est de disposer un ou plusieurs capteurs à proximité immédiate de chaque chambre de combustion d'un moteur à explosion, c'est-à-dire au contact direct du volume intérieur de cette chambre sachant que celle-ci doit rester parfaitement close, qu'il faut que chaque capteur n'engendre pas de modification des paramètres mécaniques et notamment ne nécessite pas de surépaisseurs.

Une localisation attractive permettant de répondre à ces impératifs est une localisation dans le joint de culasse. Le joint de culasse est une pièce interface parfaite par sa situation par rapport à la chambre de combustion.

De plus, une modification du joint de culasse et une adaptation d'un capteur ne sont pas une chose facile mais cela est réalisable alors que dans le cas du bloc moteur, la difficulté est de réaliser ensuite l'étanchéité du passage.

C'est en effet là que se pose le problème le plus important car une fois un capteur mis en place, il faut pouvoir le relier à la centrale d'acquisition et de commande, ceci nécessairement par une fibre ou un fil.

L'agencement selon la présente invention utilise le joint de culasse comme lieu d'implantation d'au moins un capteur, quel que soit le paramètre physique mesuré et propose une solution pour le passage des fibres ou des fils.

Pour la suite de la description, le terme fil sera utilisé pour désigner indifféremment un conducteur à base de fil électrique du type cuivre placé dans une gaine isolante thermiquement et électriquement ou une ou plusieurs fibres optiques également placées dans une gaine isolante thermiquement et électriquement, ou conducteur souple plat imprimé.

Il est en effet nécessaire de pouvoir conduire le fil à travers le joint de culasse, de la chambre de combustion jusqu'à la périphérie du joint de culasse pour le relier à la centrale d'acquisition et de commande.

Il faut que le fil ne soit pas soumis aux pressions de serrage du joint de culasse pour ne pas être dégradé et que le fil ne perturbe pas la fonction première de ce joint, l'étanchéité entre la culasse et le bloc moteur.

On connaît déjà des demandes de brevet dans lesquelles on trouve des tentatives de solution qui restent non satisfaisantes.

Dans la demande de brevet japonais JP-9195814, le joint de culasse utilisé est un joint multifeuilles. Il est prévu un capteur, disposé à proximité immédiate du bord du trou de cylindre. Les fils quant à eux sont disposés dans une gorge ménagée dans l'épaisseur d'une première plaque du joint. Une matière compressible, solidaire d'une seconde feuille, vient se superposer à cette gorge pour maintenir les fils en place dans la gorge.

Par le brevet américain US- 5 659 132, on connaît un système de capteurs permettant les mesures des paramètres dans la chambre de combustion avec une sortie des signaux mesurés en dehors du bloc moteur, en utilisant le joint de culasse pour permettre le passage des fils de liaison.

Les moyens utilisés consistent en des tubes rigides de diamètre supérieur à celui du ou des conducteurs y sont logés, l'espace périphérique vide étant comblé par un matériau isolant.

Un tel montage donne satisfaction mais nécessite un usinage des pièces en vis-à-vis pour former des gorges aptes à recevoir chaque tube.

Ceci est coûteux et reste d'une grande précision incompatible avec une fabrication industrielle, en grande série.

L'invention résout les problèmes ci-dessus par l'aménagement d'une chicane entre une plaque de base et une plaque intermédiaire pour le passage des fils suivant cette chicane, comme décrit dans la revendication 1.

L'agencement selon la présente invention est maintenant décrit en détail selon un mode de réalisation préférentiel et ses variantes.

Cette description est établie en regard des dessins annexés sur lesquels les différentes figures représentent ;
- figure 1, une vue en perspective d'une portion de joint de culasse multifeuilles avec un capteur et une superposition de certaines feuilles,

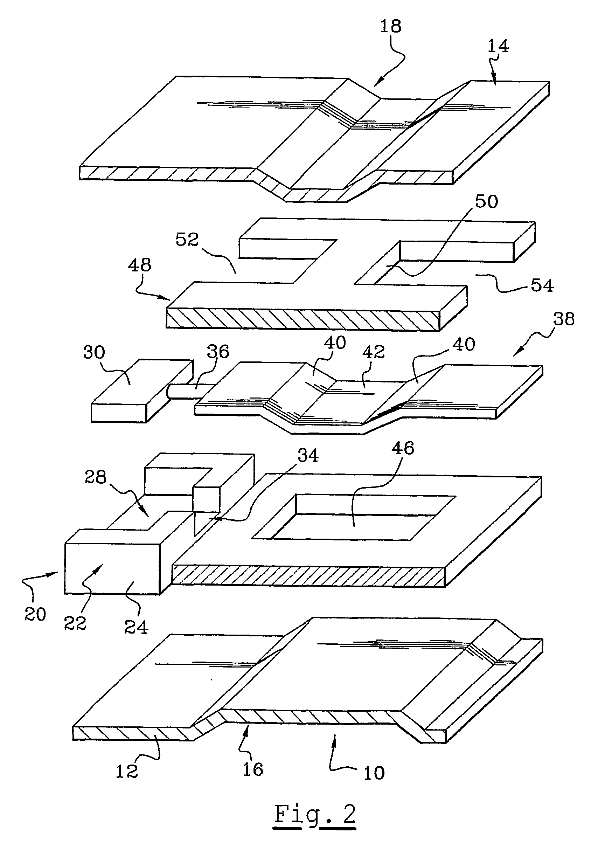

- figure 2, une vue en éclaté des éléments constituant la portion de joint de culasse multifeuilles avec un capteur de la figure 1,
- figure 3, une vue en coupe de la portion de joint de culasse multifeuilles avec un capteur tel que montré sur la figure 1,
- figure 4, une vue en perspective d'une variante de réalisation d'une portion de joint de culasse multifeuilles avec un capteur et superposition de certaines feuilles,
- figure 5, une vue en éclaté des différents éléments de la partie de joint de la figure 4,
- figure 6, une vue en coupe de la portion de joint des figures 4 et 5.

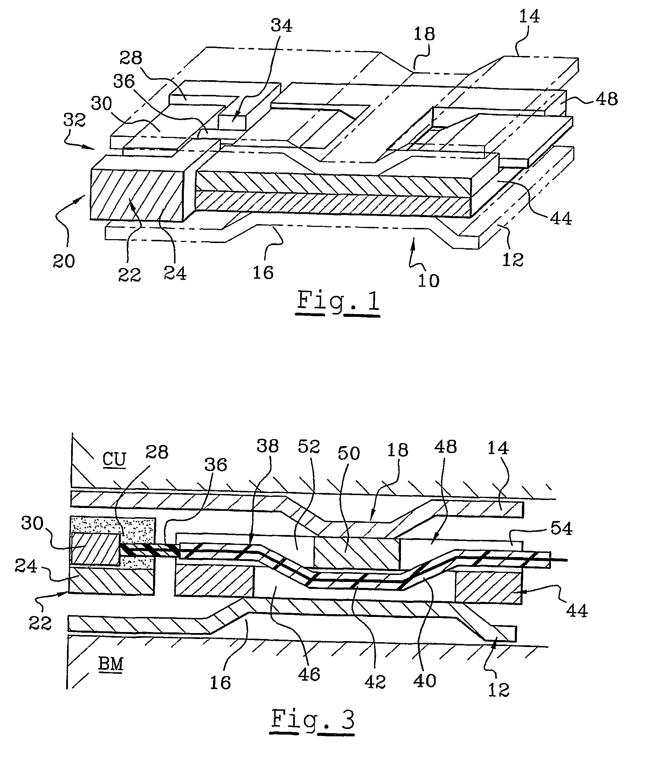

Sur la figure 1, on a représenté une portion d'un joint de culasse 10 du type multifeuilles. Ces feuilles comprennent deux plaques 12 et 14 inférieure et supérieure, en l'occurrence des plaques munies chacune d'une nervure 16 et 18.

Du côté du trou de cylindre 20, il est prévu un stoppeur 22, périphérique, interposé entre les deux plaques inférieure et supérieure.

Ce stoppeur est réalisé en une seule pièce 24, venue de fonderie ou d'usinage.

Ce stoppeur 22 est muni d'un logement 28. Ce logement est obtenu par tout moyen, tel que réserve au coulage, emboutissage, usinage, estampage.

La hauteur totale conduit à une épaisseur E.

Un capteur 30 est disposé dans ce logement, reposant ou solidarisé à la plaque inférieure. Le logement 28 est avantageusement ouvert sur le trou de cylindre 20 par l'un 32 de ses côtés, débouchant dans la chambre de combustion.

Ainsi, le capteur peut être au contact direct de l'ambiance régnant dans ladite chambre, ce qui autorise des mesures des différents paramètres en fonction de la nature du capteur.

Le logement 28 comporte aussi un passage 34 de fils 36, en vis-à-vis du côté 32 ouvert. Ces fils 36 sont reliés au capteur 30. Ils comprennent une prolongation éventuellement dans un gainage plat 38, par exemple moulé ayant une section en double chicanes. Cette section peut aussi se définir par un U à branches 40 ouvertes et à fond 42 plat.

Le joint de culasse à configuration minimale tel que décrit comprend en outre une plaque de base 44, plaque à laquelle est accolée le stoppeur, monté flottant dans ce premier mode de réalisation.

Cette plaque de base comporte une fenêtre 46 au droit des fils 36 du capteur 30 et dans l'alignement du logement 28.

Cette fenêtre est de dimensions adaptées pour recevoir la double chicane des branches 40 et du fond 42. L'épaisseur e1 de la plaque de base est supérieure à l'épaisseur des fils 36, y compris dans leur gainage 38.

Sur cette plaque de base 44 est disposée une plaque intercalaire 48. Cette plaque intercalaire comprend un pontage 50 et deux fenêtres 52, 54 ouvertes, disposées de part et d'autre de ce pontage.

Les deux fenêtres sont orientées pour venir au-dessus des fils 36 du capteur et plus particulièrement de son gainage 38.

Le pontage est ménagé pour venir se positionner au dessus du fond plat 42, laissant passer de part et d'autre les deux branches 40.

L'épaisseur e2 de la plaque intermédiaire est supérieure à l'épaisseur des fils 36, y compris dans leur gainage 38.

La somme de l'épaisseur e1 de la plaque de base et de l'épaisseur e2 de la plaque intermédiaire reste inférieure à l'épaisseur E du stoppeur.

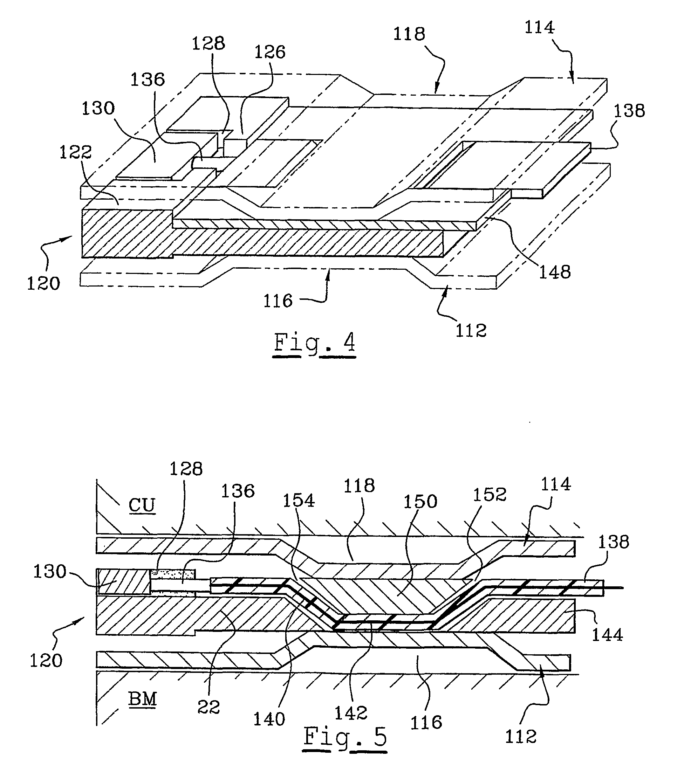

On note dans l'agencement particulier selon l'invention, représenté en coupe sur la figure 3, que la nervure 16 de la plaque inférieure 12 vient en appui sur la plaque de base 44 et obture la fenêtre 46 et que la nervure 18 de la plaque supérieure 14 vient en appui sur le pontage 50.

On constate qu'avec un tel agencement, les fils 36 et leur gainage éventuel 38 passent dans le canal à double chicane résultant des géométries des différentes pièces constituant le joint de culasse.

L'étanchéité n'est pas perturbée par cet agencement, dans la zone qui intéresse la présente invention car pour le reste de la surface du joint, les règles habituelles et les comportements associés s'appliquent.

En effet, on constate que le stoppeur reprend les efforts de serrage entre le bloc moteur BM et la culasse CU. Les plaques inférieure 12 et supérieure 14 assurent l'étanchéité au droit de ce stoppeur, dans la zone du capteur. Un matériau de remplissage est de préférence rapporté sur le capteur 30, dans le logement 28 d'une part pour l'immobiliser et d'autre part pour assurer la première barrière d'étanchéité de la façon la plus efficace qui soit.

Quant à la seconde barrière d'étanchéité elle est également réalisée au droit des nervures. Ainsi la nervure 16 de la plaque inférieure 12 vient en pression sur la plaque de base 44 et la nervure 18 vient en pression sur la plaque supérieure 14.

On constate aussi que les fils ne sont pas mis en compression.

Afin de compléter les volumes libres autour des fils et pour assurer un maintien de ceux-ci, il est possible d'introduire un polymère, de préférence du type élastomère apte à résister à la température.

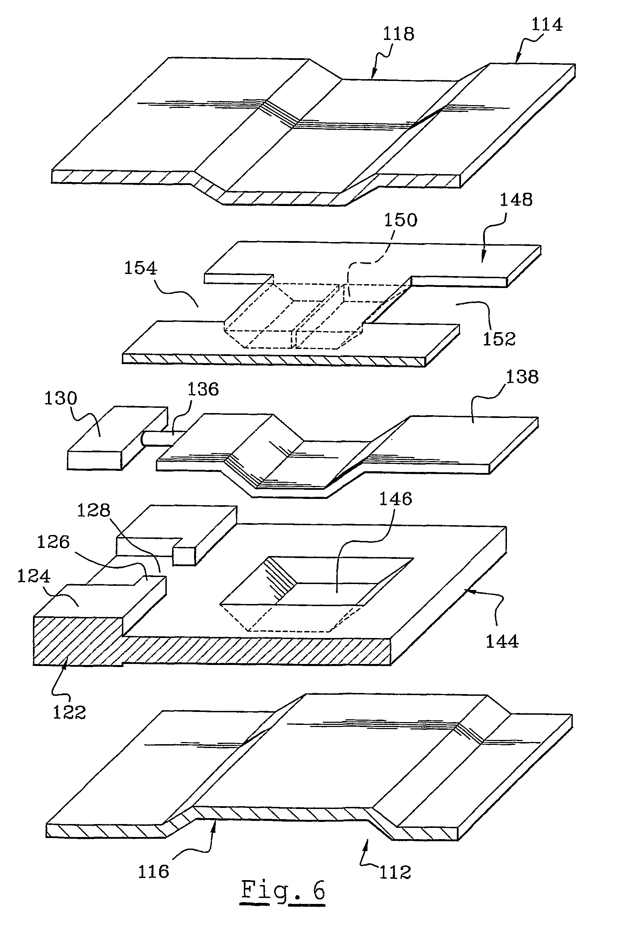

Sur les figures 4, 5 et 6, on a représenté une variante dans laquelle les éléments identiques et ayant les mêmes fonctions portent les mêmes références augmentées de 100.

Dans ce mode de réalisation, la plaque de base 144 est une plaque épaisse avec le stoppeur 122 intégré, c'est-à-dire conduisant à un ensemble monolithique.

Cette plaque de base comprend une fenêtre 146 sensiblement identique à la fenêtre 46 à ceci près que les bords d'appui des fils 136 avec un gainage 138 sur la fenêtre sont chanfreinés.

La plaque intermédiaire 154 est du type plaque mince pour que l'ensemble des épaisseurs soit inférieur à l'épaisseur au droit du stoppeur, comme précédemment. Son épaisseur est sensiblement celle des fils 136.

Cette plaque comprend au droit de la double chicane, au droit du fond plat 142, un pontage 150, en saillie, qui est de profil sensiblement conjugué avec celui de la fenêtre 146 de la plaque de base.

Le montage est identique au précédent, il convient d'adapter le profil des nervures 116 et 118 pour que les efforts de pression s'exercent bien sur les deux plaques inférieure et supérieure.

Dans cet agencement, comme montré spécifiquement sur la figure 4, avec l'assemblage monté, les fils avec le passage en chicane ne présentent aucun risque d'écrasement, y compris dans le temps puisque aucun élément ne vient en appui.

Les étanchéités sont respectées et le joint peut donc remplir sa fonction première entre le bloc moteur et la culasse.

On note que la fabrication industrielle de telles plaques est aisée. Les produits représentés schématiquement sur les figures doivent être adaptés par l'homme de l'art pour que les découpes complémentaires soient réalisées directement lors de l'emboutissage de la feuille complète, si bien que l'agencement selon l'invention n'engendre aucune opération supplémentaire.

On constate également que le but de la présente invention est atteint puisque les fils émergent du joint de culasse dans l'épaisseur duquel ils sont noyés, transmettant ainsi les informations du capteur jusqu'à une centrale d'acquisition et de traitement, ceci sans jamais être soumis à une compression susceptible d'engendrer des dégradations.

Dans le cas où les fils sont des fibres optiques, le rayon de courbure au droit de la chicane est compatible avec les rayons de courbure autorisés, sans perturber l'information qui y circule. Les bords des différentes fenêtres et logements peuvent être chanfreinés ou rayonnés suivant les besoins.

## Revendications

1. Agencement d'un joint de culasse (10) multifeuilles comprenant au moins deux plaques (12,14;112,114) inférieure et supérieure à nervures (16,18;116,118), une plaque de base (44;144) et une plaque intermédiaire (48;148) comprenant un capteur (30,130) disposé à proximité immédiate du bord de trou de cylindre (20,120) et des fils (36,136) de transmission des informations issues de ce capteur, **caractérisé en ce qu'**il consiste à ménager une chicane (46,52,54;146,152,154) entre la plaque de base et la plaque intermédiaire pour le passage desdits fils (36;136) suivant cette chicane.

2. Agencement d'un joint de culasse (10) multifeuilles selon la revendication 1, **caractérisé en ce que** la plaque de base (44;144) comporte une fenêtre (46;146) au droit des fils (36;136) du capteur (30;130) et la plaque intercalaire (48;148) comprend un pontage (50;150) et deux fenêtres (52,54;152,154) ouvertes, disposées de part et d'autre de ce pontage.

3. Agencement d'un joint de culasse (10) multifeuilles selon la revendication 2, **caractérisé en ce que** le pontage (50;150) est ménagé pour venir se positionner au dessus des fils passant en chicane avec un fond plat (42,;142) et deux branches (40; 140).

4. Agencement d'un joint de culasse (10) multifeuilles selon la revendication 3, **caractérisé en ce que** la plaque intermédiaire (48) a une épaisseur supérieure à celle des fils et **en ce que** le pontage (50) est dans le plan de cette plaque intermédiaire (48).

5. Agencement d'un joint de culasse (10) multifeuilles selon la revendication 3, **caractérisé en ce que** la plaque intermédiaire (148) a une épaisseur sensiblement égale à celle des fils et **en ce que** le pontage (150) fait saillie dans la fenêtre (146) de la plaque de base (144).

6. Agencement d'un joint de culasse (10) multifeuilles selon l'une quelconque des revendications précédentes, **caractérisé en ce qu'**il comprend un stoppeur (22,122), disposé entre les plaques nervurées (12,14 ; 112,114) et au droit de la plaque de base (44;144) et de la plaque intermédiaire (48,148), la hauteur E de ce stoppeur étant supérieure à la somme des hauteurs e1 de la plaque de base et e2 de la plaque intermédiaire.

7. Agencement d'un joint de culasse (10) multifeuilles selon la revendication 6, **caractérisé en ce que** le stoppeur (22,122) comprend un logement (28,128) pour loger le capteur (30,130), logement ouvert sur un côté (32,132), vers le trou (20,120) de cylindre et comprenant un passage (34,134).

8. Agencement d'un joint de culasse (10) multifeuilles selon la revendication 7, **caractérisé en ce que** les espaces libres autour du capteur dans le logement (28,128) sont comblés.

9. Agencement d'un joint de culasse (10) multifeuilles selon l'une des revendications 6, 7 ou 8, **caractérisé en ce que** le stoppeur (22,122) est monté flottant par rapport aux plaques.

## Patentansprüche

1. Anordnung einer mehrlagigen Zylinderkopfdichtung (10) mit mindestens zwei mit Rippen (16, 18; 116, 118) versehenen Platten, einer unteren und einer oberen (12, 14; 112, 114), mit einer Basisplatte (44; 144) und mit einer Zwischenplatte (48; 148), mit einem Sensor (30, 130), der in direkter Nähe des Zylinderlochrands (20, 120) angeordnet ist, und mit Drähten (36, 136) zur Übertragung der von diesem Sensor kommenden Informationen, **dadurch gekennzeichnet, dass** sie darin besteht, zwischen der Basisplatte und der Zwischenplatte eine Umlenkplatte (46, 52, 54; 146, 152, 154) für den Durchgang der Drähte (36; 136) entlang dieser Umlenkplatte auszubilden.

2. Anordnung einer mehrlagigen Zylinderkopfdichtung (10) nach Anspruch 1, **dadurch gekennzeichnet, dass** die Basisplatte (44; 144) ein Fenster (46; 146) vor den Drähten (36; 136) des Sensors (30; 130) und die Zwischenplatte (48; 148) eine Brücke (50; 150) und zwei offene Fenster (52, 54; 152, 154) aufweist, die zu beiden Seiten dieser Brücke angeordnet sind.

3. Anordnung einer mehrlagigen Zylinderkopfdichtung (10) nach Anspruch 2, **dadurch gekennzeichnet, dass** die Brücke (50; 150) ausgebildet ist, um sich über den Drähten zu positionieren, die umgelenkt. mit einem flachen Boden (42; 142) und zwei Zweigen (40; 140) durchlaufen.

4. Anordnung einer mehrlagigen Zylinderkopfdichtung (10) nach Anspruch 3, **dadurch gekennzeichnet, dass** die Zwischenplatte (48) eine Dicke hat, die größer ist als diejenige der Drähte, und dass die Brücke (50) sich in der Ebene dieser Zwischenplatte befindet (48).

5. Anordnung einer mehrlagigen Zylinderkopfdichtung (10) nach Anspruch 3, **dadurch gekennzeichnet, dass** die Zwischenplatte (148) eine Dicke im Wesentlichen gleich derjenigen der Drähte hat, und dass die Brücke (150) in das Fenster (146) der Basisplatte (144) vorsteht.

6. Anordnung einer mehrlagigen Zylinderkopfdichtung (10) nach einem der vorhergehenden Ansprüche, **dadurch gekennzeichnet, dass** sie einen Stopper (22, 122) aufweist, der zwischen den gerippten Platten (12, 14; 112, 114) und vor der Basisplatte (44; 144) und der Zwischenplatte (48, 148) angeordnet ist, wobei die Höhe E dieses Stoppers größer ist als die Summe der Höhen e1 der Basisplatte und e2 der Zwischenplatte.

7. Anordnung einer mehrlagigen Zylinderkopfdichtung (10) nach Anspruch 6, **dadurch gekennzeichnet, dass** der Stopper (22, 122) einen Sitz (28, 128) zur Aufnahme des Sensors (30, 130) aufweist, wobei der Sitz auf einer Seite (32, 132) zum Zylinderloch (20, 120) hin offen ist und einen Durchgang (34, 134) aufweist.

8. Anordnung einer mehrlagigen Zylinderkopfdichtung (10) nach Anspruch 7, **dadurch gekennzeichnet, dass** die Freiräume im Sitz (28, 128) um den Sensor herum gefüllt sind.

9. Anordnung einer mehrlagigen Zylinderkopfdichtung (10) nach einem der Ansprüche 6, 7 oder 8, **dadurch gekennzeichnet, dass** der Stopper (22, 122) bezüglich der Platten schwimmend angeordnet ist.

## Claims

1. Arrangement for a multiple-plate cylinder head gasket (10) comprising at least two plates (12, 14; 112, 114), a lower one and an upper one with ribs (16, 18; 116, 118), a base plate (44; 144) and an intermediate plate (48; 148) comprising a sensor (30, 130) disposed in the intermediate proximity of the cylinder hole edge (20, 120) and wires (36, 136) for the transmission of data coming from this sensor, **characterized in that** it consists in forming a chicane (46, 52, 54; 146, 152, 154) between the base plate and the intermediate plate for the passage of the said wires (36; 136) following this chicane.

2. Arrangement for a multiple-plate cylinder head gasket (10) according to Claim 1, **characterized in that** the base plate (44; 144) comprises a window (46; 146) in alignment with the wires (36; 136) of the sensor (30; 130) and the intermediate plate (48; 148) comprises a bridging (50; 150) and two open windows (52, 54; 152, 154), disposed on either side of this bridging.

3. Arrangement for a multiple-plate cylinder head gasket (10) according to Claim 2, **characterized in that** the bridging (50; 150) is formed such that it becomes positioned over the wires passing through a chicane with a flat bottom (42; 142) and two branches (40; 140).

4. Arrangement for a multiple-plate cylinder head gasket (10) according to Claim 3, **characterized in that** the intermediate plate (48) has a thickness greater than that of the wires and **in that** the bridging (50) is in the plane of this intermediate plate (48).

5. Arrangement for a multiple-plate cylinder head gasket (10) according to Claim 3, **characterized in that** the intermediate plate (148) has a thickness substantially equal to that of the wires and **in that** the bridging (150) protrudes into the window (146) of the base plate (144).

6. Arrangement for a multiple-plate cylinder head gasket (10) according to any one of the preceding claims, **characterized in that** it comprises a stopper (22, 122), disposed between the ribbed plates (12, 14; 112, 114) and in alignment with the base plate (44; 144) and the intermediate plate (48, 148), the height E of this stopper being greater than the sum of the heights e1 of the base plate and e2 of the intermediate plate.

7. Arrangement for a multiple-plate cylinder head gasket (10) according to Claim 6, **characterized in that** the stopper (22, 122) comprises a housing (28, 128) for housing the sensor (30, 130), this housing being open on one side (32, 132) facing the cylinder hole (20, 120) and comprising a passage (34, 134).

8. Arrangement for a multiple-plate cylinder head gasket (10) according to Claim 7, **characterized in that** the free spaces around the sensor in the housing (28, 128) are filled.

9. Arrangement for a multiple-plate cylinder head gasket (10) according to one of Claims 6, 7 or 8, **characterized in that** the stopper (22, 122) is mounted such that it is floating with respect to the plates.
